# EUROPÄISCHE PATENTSCHRIFT

(11) **EP 2 191 613 B1**
(45) Veröffentlichungstag und Bekanntmachung des Hinweises auf die Patenterteilung: **15.02.2012**
(21) Anmeldenummer: 08758766.3
(22) Anmeldetag: 27.05.2008
(51) Int. Cl.: H04L 12/24, H04L 12/28, H04L 29/08

(54) **VERFAHREN ZUM BENUTZERSPEZIFISCHEN KONFIGURIEREN EINES KOMMUNIKATIONSPORTS**
METHOD FOR THE USER-SPECIFIC CONFIGURATION OF A COMMUNICATIONS PORT
PROCÉDÉ DE CONFIGURATION SPÉCIFIQUE À L' UTILISATEUR D'UN PORT DE COMMUNICATION

(30) Priorität: 21.08.2007 DE 102007039516
(43) Veröffentlichungstag der Anmeldung: 02.06.2010
(73) Patentinhaber: Deutsche Telekom AG, 53113 Bonn (DE)
(72) Erfinder: HAAG, Thomas, 63110 Rodgau (DE); BUSSER, Michael, 55543 Bad Kreuznach (DE); KRAUS, Bernd, 64850 Schaafheim (DE); MEYER, Klaus, 53173 Bonn (DE); HAMACHER, Peter, 64380 Rossdorf (DE)
(86) Internationale Anmeldenummer: PCT/EP2008/004179
(87) Internationale Veröffentlichungsnummer: WO 2009/024198

(56) Entgegenhaltungen:
- US-A1- 2003 223 482
- US-A1- 2004 177 276
- US-A1- 2006 133 405
- SANJAY WADHWA JUNIPER NETWORKS JEROME MOISAND JUNIPER NETWORKS SWAMI SUBRAMANIAN JUNIPER NETWORKS THOMAS HAAG T-SYSTEMS NORBERT VO: "Protocol for Access Node Control Mechanism in Broadband Networks; draft-ietf-ancp-protocol-01.txt" IETF STANDARD-WORKING-DRAFT, INTERNET ENGINEERING TASK FORCE, IETF, CH, Bd. ancp, Nr. 1, 9. Juli 2007 (2007-07-09), XP015051024 ISSN: 0000-0004

## Beschreibung

Die vorliegende Erfindung betrifft das Gebiet der Kommunikationsnetze.

Zur Konfiguration von Netzwerkelementen in einem breitbandigen Zugangsnetz können lokale Netzwerkmanagementsysteme eingesetzt werden, die den einzelnen Netzwerkelementen, wie beispielsweise einem Zugangsmultiplexer bzw. Zugangsserver (AN: Access Node), einem IP-basiertes Gateway (BRAS: Broadband Remote Access Server), einem Kundenauthentifizierungsserver (AAA: Authentification, Authorization, Accounting), einem Kundenprofil-Server (KD-Server) oder einem DSL-Profilserver, zugeordnet sind. Die Konfigurationsdaten eines Breitbandanschlusses sind dabei auf einen physikalischen Port bezogen und werden statisch eingerichtet. Wechselt ein Benutzer den Port z.B. durch Umzug, so kann eine Änderung der Portkonfiguration nur durch manuelle Konfigurationsänderung der betroffenen Netzwerkelemente erfolgen. Dabei können beispielsweise CPErelevante Konfigurationen (CPE: Customer Premise Equipment) über bestehende physikalische DSL-Verbindungen durchgeführt werden (DSL: Digital Subscriber Line). Eine DSL-spezifische Konfiguration kann derzeit jedoch nicht durchgeführt werden, wie es beispielsweise im DSL-Forum, Dokument TR-69, beschrieben ist.

Derzeit wird im DSL-Forum die Standardisierung bezüglich eines Austauschens von Konfigurations- bzw. Steuerdaten zwischen einem BRAS und einem AN diskutiert. In diesem Zusammenhang sind auch die Dokumente WT-147 Layer 2 control mechanism (Framework) und die IETF-Protokollspezifikation ANCP (ANCP: Access Node Control Protocol) zu erwähnen. In diesen Dokumenten findet sich eine Grobbeschreibung einer verwendungsspezifischen Verbindungskonfiguration (Use Case Line Configuration). Es werden jedoch keine Architekturkonzepte beschrieben, die mit den zugehörigen Servern, AAA-Architekturen sowie dem zugehörigen Parameteraustausch verbunden sind.

Dokument XP15051024, draft-ietf-ancp-protocol-01.txt beschreibt eine Profil auswahl in einem DSLAM.

Es ist eine Aufgabe der Erfindung, ein effizientes Konzept einer Verbindungskonfiguration zu schaffen.

Diese Aufgabe wird durch die Merkmale der unabhängigen Patentansprüche gelöst. Vorteilhafte Weiterbildungsformen sind in den abhängigen Patentansprüchen angegeben.

Die Erfindung betrifft ein Verfahren zum benutzerspezifischen Konfigurieren eines Kommunikationsports, gemäß Anspruch 1.

Die Erfindung basiert auf der Erkenntnis, dass die Kommunikation üblicherweise über Kommunikationsports abgewickelt wird. So kann beispielsweise ein AN eine Mehrzahl, beispielsweise 1.000, Kommunikationsports und somit Teilnehmer verwalten, die beispielsweise jeweils einem.unterschiedlichen Benutzer zugeordnet sind. Durch das erfindungsgemäße Konzept wird ein zweistufiger Verbindungsaufbau geschaffen, bei dem in einem ersten Schritt das Default-Profil, das eine Basiskonfiguration enthalten kann, zum Aufbau einer Grundverbindung zu beispielsweise einem BRAS verwendet wird. Auf der Basis des Default-Profils werden dann die benutzerspezifischen Verbindungsparameter ermittelt und in Form des benutzerspezifischen Konfigurationsprofils zu demjenigen AN übertragen, der den betroffenen Kommunikationsport verwaltet.

Gemäß einem weiteren Aspekt wird das Default-Profil über ein Kommunikationsnetzwerk, beispielsweise über ein IP-basiertes Kommunikationsnetzwerk (IP: Internet Protocol) zu einer ersten Netzwerkentität, beispielsweise zu einem BRAS, ausgesendet. Die erste Netzwerkentität ordnet das Default-Profil dem benutzerspezifischen Konfigurationsprofil zu, das durch die erste Netzwerkentität über das Kommunikationsnetzwerk zu einer zweiten Netzwerkentität, beispielsweise zu einem AN, der den Kommunikationsport verwaltet, ausgesendet wird. Die zweite Netzwerkentität empfängt das benutzerspezifische Konfigurationsprofil und konfiguriert den Kommunikationsport. Durch diese dezentrale Verwaltung der benutzerspezifischen Konfigurationsprofile kann somit jeder Port standortunabhängig benutzerspezifisch konfiguriert werden.

Der Schritt des Zuordnens des Default-Profils zu dem benutzerspezifischen Konfigurationsprofil kann beispielsweise das Authentifizieren oder das Identifizieren oder das Erfassen des Standortes des vorbestimmten Benutzers auf der Basis des Default-Profils umfassen. Hierzu kann das Default-Profil beispielsweise einen Parameter der Schicht 1 (Layer 1) oder der Schicht 2 (Layer 2) eines Kommunikationsprotokolls, beispielsweise eines OSI-Kommunikationsprotokolls (OSI: Open System Interconnect) umfassen. Bei dem Parameter der Schicht 1 oder der Schicht 2 kann es sich beispielsweise um einen DSL-Schichtparameter oder um einen Ethernet-Parameter handeln. Darüber hinaus kann das Default-Profil einen E-Side-Electrical-Length-Parameter (ESEL) umfassen. Ferner kann das Default-Profil eine Benutzeridentifikation umfassen.

Der Schritt des benutzerspezifischen Konfigurierens des Kommunikationsports kann beispielsweise eine VLAN-Konfiguration (VLAN: Virtual Local Area Network) und/oder eine Sprach-Daten-Umleitung und/oder eine QoS-Einstellung (QoS: Quality of Service) und/oder eine CoS-Einstellung (CoS: Class of Service) und/oder eine Einstellung eines Paketfilters und/oder eine Einstellung eines Frame-Filters und/oder eine Einstellung eines Multicast-Betriebs und/oder eine Einstellung eines Netzwerkzugriffs und/oder eine Wahl eines netzwerkspezifischen Adaptionsmechanismus, beispielsweise eines ATM-Mechanismus (ATM: Asynchronous Transfer Mode) und/eines EFM (EFM: Ethernet in the First Mile), und/oder eine Wahl eines Enkapsulationstypus, insbesondere eines Bridge- oder eines Routing-Typus, umfassen.

Gemäß einem weiteren Aspekt betrifft die Erfindung eine Netzwerkentität, beispielsweise einen BRAS, zum Bereitstellen eines benutzerspezifischen Konfigurationsprofils eines Kommunikationsports mit einem Profilserver zum Zuordnen eines Default-Profils zu einer weiteren Netzwerkentität, beispielsweise zu einem AN und/oder zu einem Benutzer, um ein Grundkonfigurationsprofil, das der weiteren Netzwerkentität und/oder dem Benutzer zugeordnet ist, zu erhalten. Die Netzwerkentität umfasst ferner einen Anwendungsserver zum Verknüpfen des Grundkonfigurationsprofils mit benutzerspezifischen Daten, um das benutzerspezifische Konfigurationsprofil des Kommunikationsports zu erhalten.

Die Netzwerkentität kann ferner einen Authentifizierungsserver oder einen Identifizierungsserver umfassen, der ausgebildet ist, die weitere Netzwerkentität oder den Benutzer auf der Basis des Default-Profils zu authentifizieren oder zu identifizieren.

Die Netzwerkentität kann ferner einen Empfänger zum Empfangen des Default-Profils über ein Kommunikationsnetzwerk und/oder einen Sender zum Aussenden des benutzerspezifischen Konfigurationsprofils über das Kommunikationsnetzwerk umfassen.

Die Erfindung betrifft ferner ein Verfahren zum Bereitstellen eines benutzerspezifischen Konfigurationsprofils eines Kommunikationsports, bei dem ein Default-Profil einer weiteren Netzwerkentität oder einem Benutzer zugeordnet wird, um ein Grundkonfigurationsprofil, das der weiteren Netzwerkentität oder dem Benutzer zugeordnet ist, zu erhalten, und bei dem das Grundkonfigurationsprofil mit benutzerspezifischen Daten verknüpft wird, um das benutzerspezifische Konfigurationsprofil des Kommunikationsports zu erhalten.

Weitere Schritte des Verfahrens zum Bereitstellen des benutzerspezifischen Konfigurationsprofils ergeben sich aus der Funktionalität der erfindungsgemäßen Netzwerkentität zum Bereitstellen des benutzerspezifischen Konfigurationsprofils.

Gemäß einem weiteren Aspekt betrifft die Erfindung eine Netzwerkentität mit einem konfigurierbaren Konfigurationsport und einer Bereitstellungseinrichtung, beispielsweise einem Speicher, zum Bereitstellen eines Default-Profils und einer Konfigurationseinrichtung zum Konfigurieren des konfigurierbaren Kommunikationsports unter Verwendung des Default-Profils, um eine Default-Konfiguration des konfigurierbaren Kommunikationsports zu erhalten. Die Netzwerkentität umfasst ferner einen Sender zum Aussenden des Default-Profils unter Verwendung der Default-Konfiguration, einen Empfänger zum Empfangen eines benutzerspezifischen Konfigurationsprofils unter Verwendung der Default-Konfiguration, wobei die Konfigurationseinrichtung ausgebildet ist, den konfigurierbaren Kommunikationsport unter Verwendung des benutzerspezifischen Konfigurationsprofils zu konfigurieren. Die Netzwerkentität kann beispielsweise ein AN-Server sein, der den konfigurierbaren Kommunikationsport verwaltet.

Gemäß einem weiteren Aspekt betrifft die Erfindung ein Verfahren zum Konfigurieren eines konfigurierbaren Kommunikationsports mit Bereitstellen eines Default-Profils, Konfigurieren des konfigurierbaren Kommunikationsports unter Verwendung des Default-Profils, um eine Default-Konfiguration des konfigurierbaren Kommunikationsports zu erhalten, Aussenden des Default-Profils unter Verwendung der Default-Konfiguration, Empfangen eines benutzerspezifischen Konfigurationsprofils unter Verwendung der Default-Konfiguration und Konfigurieren des konfigurierbaren Kommunikationsports unter Verwendung des benutzerspezifischen Konfigurationsprofils.

Weitere Schritte des Verfahrens zum Konfigurieren des konfigurierbaren Kommunikationsports ergeben sich direkt aus der Funktionalität der erfindungsgemäßen Netzwerkentität mit dem konfigurierbaren Kommunikationsport.

Weitere Ausführungsbeispiele werden anhand der beiliegenden Figuren näher erläutert. Es zeigen:
Fig. 1 ein Blockdiagramm einer Netzwerkarchitektur;
Fig. 2 ein Blockdiagramm einer Netzwerkentität.

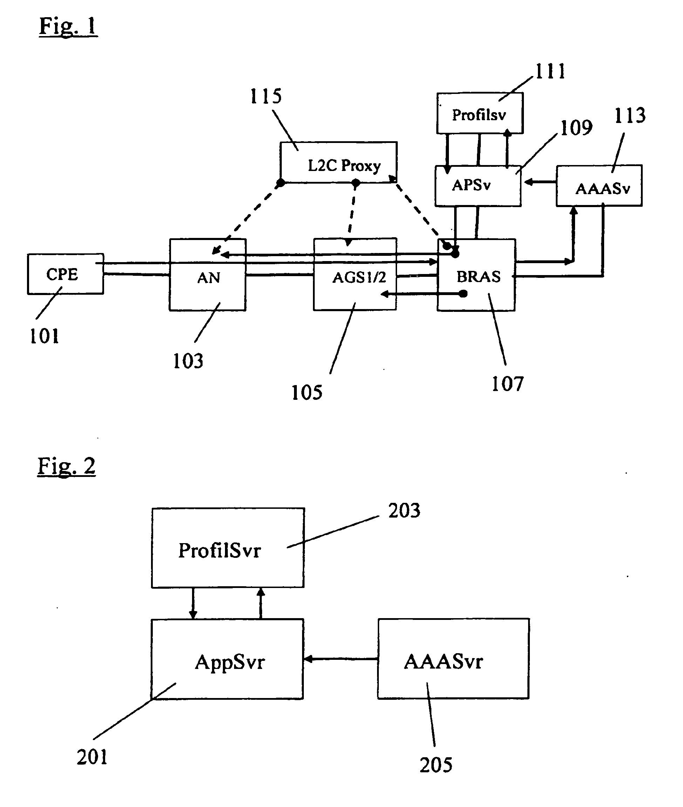

Fig. 1 zeigt eine Netzwerkarchitektur mit einem CPE 101, beispielsweise einem Personal Computer, einem Zugriffsserver 103, beispielsweise einem AN, einem optionalen Application Gateway Server 105 (AGS 1/2), einem BRAS 107, einem Anwendungsserver 109, beispielsweise einem Applikationsserver (APSv), einem Profilserver 111 und einem Authentifizierungsserver 113 (AAASv). Ferner ist optional ein L2C-Proxy 115 (L2C: Second Level Cache) vorgesehen.

Das CPE 101 kommuniziert mit dem AN 103 sowie mit dem BRAS 107 über den optionalen AGS 105. Dabei sind der AN 103 sowie der BRAS 107 Netzwerkentitäten, wobei der BRAS 107, der Anwendungsserver 109, der Profilserver 111 und der Authentifizierungsserver 113 eine Netzwerkentität bilden können.

Der BRAS 107 kommuniziert mit dem AGS 105 sowie mit den Servern 109, 111 und 113. Der AGS 105 ist zwischen dem AN 103 und dem BRAS 107 angeordnet, wobei sowohl der AN 103 als auch der AGS 105 als auch der BRAS 107 mit dem L2C-Proxy 115 kommunizieren.

Der Authentifizierungsserver 113 kommuniziert ferner beispielsweise mit dem Anwendungsserver 109, der sowohl mit dem Profilserver 111 als auch mit dem BRAS 107 kommuniziert.

Ein Merkmal des erfindungsgemäßen Netzwerkkonzeptes ist die Bindung eines zu verwendenden Profils an einen Benutzer und nicht notwendigerweise an einen Port. Dies ermöglicht dem Netzbetreiber die Verwendung vorhandener zentraler Kundendatenbanken wie z.B. RADIUS (RADIUS: Remote Authentification Dial-in-User Service) zur Steuerung der kunden- und produktindividuellen Portkonfigurationen. Hierzu wird beispielsweise abhängig von einer Kundenauthentifizierung (Benutzerauthentifizierung) und einem Benutzerprofil (Kundenprofil) ein Port bzw. eine Verbindung von dem BRAS 107 aus konfiguriert. Hierzu ist das Bestehen einer Steuerverbindung zwischen dem BRAS 107 und dem AN 103, z.B. durch ANCP (ANCP: Access Node Control Protocol) vorteilhaft. Existiert eine derartige Steuerverbindung nicht, so wird die in Fig. 1 dargestellte Architektur gegebenenfalls um diese erweitert. Somit ist es möglich, dass ein Benutzer das Profil bzw. die Funktionen wählt, welches bzw. welche am besten zu seinen Anwendungen, wie beispielsweise Voice over IP, passt bzw. passen. Daher ist es möglich, beispielsweise ein Kommunikationsprodukt wie Voice over IP zu wechseln, aufzuwerten oder abzuwerten, ohne dass ein manueller Eingriff durch einen Netzbetreiber erfolgen muss.

Im Folgenden wird das erfindungsgemäße Konzept anhand der DSL-Technologie beispielhaft erörtert. Die DSL-Technologie stellt jedoch eine der vielen Kommunikationstechnologien dar, in welchen das erfindungsgemäße Konzept eingesetzt werden kann.

Erfindungsgemäß kann beispielsweise ein DSL-Anschluss einmal mit einem Default-Profil konfiguriert werden, das dem Benutzer einen Zugang zum BRAS 107 ermöglicht. Der BRAS 107 authentifiziert den Benutzer beispielsweise unter Verwendung des RADIUS-Verfahrens. Nach der Authentifizierung bzw. nach der Identifikation des Benutzers kann auf der Basis von zentral hinterlegten Daten das jeweilige Produkt und ein Portprofil zwecks Durchführung der Konfiguration des Ports abgerufen werden. Dieses im Folgenden als "Zero-Touch" bezeichnete Konzept ermöglicht die Einsparung von Betriebskosten (OPEX: Operational Expediture), weil alle Anschlüsse mit einem minimalen Default-Profil fertig konfiguriert werden können, wobei der Benutzer selbst die zum Produkt, beispielsweise zum Voice over IP-Verfahren, passende Konfiguration anstoßen kann.

Was die Netzdimensionierung bzw. die Netzbeschaltung anbetrifft, so können die DSL-Linien beispielsweise in den Modi Fix Rate oder Rate Adaptive Mode betrieben werden. In dem Rate Adaptive Mode passt sich die Linie, d.h. die Verbindung, bei Synchronisierung den physikalischen Bedingungen, beispielsweise den physikalischen Übertragungsbedingungen, wie Dämpfung, an. Hierbei kann beispielsweise ein Fenster vorgegeben werden, wobei die Synchronisation beispielsweise innerhalb der in dem Fenster auftretenden Maximalwerte erfolgen kann. Dieses Konzept ist jedoch bei einer 100%igen Netzbeschaltung mit DSL-Anschlüssen, welche jeweils mit einer maximalen Bitrate betrieben werden, netztechnisch schwierig umzusetzen. Unter der Annahme, dass zukünftig die DSL-Technologie in Verbindung mit VoIP POTS (Voice over IP Plane Old Telephone Service) und ISDN ablösen wird, so muss jedoch von einer 100%igen Netzbeschaltung ausgegangen werden. Daher dürfen die Linien nicht auf Maximalwerte konfiguriert werden. Das vorstehende Konzept ermöglicht daher auch bei einer 100%igen Netzbeschaltung eine automatische und kundenprofilabhängige Konfiguration des AN bzw. des darin angeordneten Ports.

In Abhängigkeit von dem jeweiligen Produktkonzept, beispielsweise von einem Voice-over-IP-Konzept oder von einem Quality-of-Service-Konzept, können die DSL-Anschlüsse mit einem minimalen Default-Profil konfiguriert werden und beispielsweise in Verbindung mit dem ebenfalls bei DSL einsetzbaren Verfahren Seemless Rates Adaption können ferner die Verbindungsparameter geändert werden; ohne dass die Verbindung unterbrochen wird und die Leitung an den Maximalgrenzen betrieben werden muss.

Der vorstehend erwähnte Zero-Touch-Ansatz erlaubt eine automatische Konfiguration der Verbindungsparameter, wobei jeder DSL-Port beispielsweise zunächst mit einer Basiskonfiguration entsprechend einem Basisprofil und dem zugehörigen ESEL-Parameter startet. Die ESEL-Parameter ergeben sich beispielsweise aus dem Standort des jeweiligen ANs (AN-ID: AN Identification). Der ESEL-Konfigurationsparameter definiert dabei die elektrische Länge bzw. die Dämpfung eines Hauptkabelabschnitts zwischen einer Vermittlungsstelle und einem Kabelverzweiger (KVz) mit DSL-Einspeisung. Mit dieser Information kann beispielsweise durch eine zentrale Netzwerkeinheit wie beispielsweise DSLAM (DSLAM: Digital Subscriber Line Access Multiplexer) veranlasst werden, die Sendeleistung beispielsweise mithilfe des Downstream-Power-Back-Off-Verfahrens (DPBO) anzupassen.

Die Dämpfung wird dabei in Dezibel bei einer Bezugsfrequenz von 1 MHz angegeben. Der Wertebereich erstreckt sich zwischen 0 dB und 127,5 dB mit einer Schrittweite von 0,5 dB. Der Wert 0 bewirkt dabei, dass das DPBO-Verfahren ausgeschaltet wird. Eine Anpassung der Sendeleistung ist immer dann erforderlich, wenn ein Sender an mehreren Orten Datensignale einspeist, was beispielsweise dann der Fall ist, wenn ein DSLAM in einem KVz aufgebaut ist, so dass weitere Teilnehmer von der Vermittlungsstelle über die gleiche Kabeltrasse versorgt werden.

In der vorstehend genannten Basiskonfiguration entsprechend dem Basisprofil ist es einem Benutzer nun möglich, über den BRAS 107 mit dem AAA-Server 113 zu kommunizieren, um sich beispielsweise zu authentifizieren. Mit der erfolgreichen Authentifikation ergibt sich aus den Nutzerdaten das von diesem Benutzer verwendete Produkt. Das zugehörige Profil wird beispielsweise zu dem AN 103 übertragen. Die Verbindung zwischen der Kundeninformation (Benutzerinformation) und der Portinformation kann beispielsweise über vMAC (vMAC: Virtual Medium Access Control) hergestellt werden.

Bei einer weiteren Ausführungsform des Zero-Touch-Ansatzes, bei der das CPE miteingebunden wird, können auch ganze Produktwechsel inklusive einer automatischen Konfiguration von evtl. fest zugeordneten IP-Adressen, VLANs usw. einer benutzerspezifischen Konfiguration zugänglich. So können beispielsweise bestimmte Benutzergruppen, die beispielsweise Business Voice Office bzw. Business Access IP nutzen, unabhängig von der verwendeten Anmeldekennung in ein Intranet oder VPN (VPN: Virtual Private Network) eingebunden werden. Mit einem Wechsel der Anmeldekennung scheidet der jeweilige Benutzer aus dem VPN aus und tritt dann als privater Benutzer im Internet auf.

Die Authentifizierung erfolgt dabei zunächst beispielsweise mithilfe eines Basisprofils. Das Profil, welches dem jeweiligen Port zugewiesen werden soll, wird durch den Profilserver 111 in Form eines Grundprofils bereitgestellt. Dieses Profil, welches bisher zur Parametrisierung der Leitung diente, kann jetzt weitere Angaben zur Konfiguration des CPE enthalten, um beispielsweise diesen Anschluss in ein VPN aufzunehmen. Dieses Konzept kann beispielsweise bei einer TK-Anlage im Netz, was derzeit auf einer MSP (Multi Service Plattform) realisiert wird, realisiert werden.

Gleichzeitig sendet der BRAS 107 über die zwischen dem BRAS 107 und dem CPE 101 bestehende Verbindung, beispielsweise eine PPPoE (Point to Point Protocol over Ethernet) oder eine DHCP-Verbindung (DHCP: Dynamic Host Configuration Protocol), die Konfiguration an das CPE 101, sofern eine solche Konfiguration des CPE 101 aus dem angeforderten Produkt hervorgeht bzw. für dieses erforderlich ist. Das CPE 101 ändert seine Konfiguration entsprechend den übergebenen Daten, wobei eine Neusynchronisation der DSL-Verbindung durchgeführt werden kann. Gemäß einem weiteren Aspekt können in die vorstehend beschriebenen Abläufe sowohl der VN 103 als auch der AGS 105 miteinbezogen werden (VLAN-Verschaltung). Neben der Konfiguration der übertragungstechnischen Aspekte können ferner auch Einstellungen auf den OSI-Schichten 2 bis 4 erfolgen. Dabei ist es möglich, eine VLAN-Konfiguration, eine Voice-Traffic-Umleitung, eine CoS/QoS-Zubuchung bzw. -Änderung, eine Setzung von Paketfilter oder Frame-Filter, eine Steuerung der Multicast-Produkte oder von Access-Listen, eine Wahl des jeweiligen Adaptionsmechanismus wie ATM oder EFM) oder eine Wahl des Enkapsulationstyps wie Bridge oder Routing-Mode vorgenommen werden.

Das erfindungsgemäße Konzept ermöglicht somit eine weit reichende Port-Mobilität, insbesondere eine DSL-Port-Mobilität, wobei ausgehend von einem Default-Profil ein Benutzer sich über einen beliebigen DSL-Port anschalten und auf der Basis der Kundenkennung sein zugehöriges Produktprofil innerhalb der physikalischen Grenzen des jeweiligen Anschlusses erhalten kann.

Erfindungsgemäß kann das Default-Profil alle technischen Parameter enthalten, die für eine Konfiguration eines Ports, beispielsweise eines DSL-Ports, benötigt werden. Unter dem Default-Profil ist ein Grundprofil zu verstehen, welches es ermöglicht, durch die Zuweisung eines minimalen Parametersatzes den DSL-Port zur Datenübertragung zu konfigurieren. Die übergebenen Parameter sind bevorzugt nicht vollständig, sie ermöglichen jedoch einen Notbetrieb, der eine rudimentäre Kommunikation zulässt. Als Inhalt können beispielsweise Parameter des Layers 1 übergeben werden, beispielsweise DSL-Layer-Parameter, wie DSL-Typ oder elektrische Parameter. Ferner können Parameter des Layers 2 übergeben werden, wie beispielsweise Ethernet-Parameter, wie VLAN, Filterfunktionen oder CoS. Durch die Übergabe des Parametersatzes bzw. des Profils wird einem Port die Konfiguration des jeweiligen Ports zugewiesen. Im Parametersatz können beispielsweise die Parameter des Layers 1 und des Layers 2 enthalten werden.

Fig. 2 zeigt eine Netzwerkentität mit einem Anwendungsserver 201 (AppSvr: Application Server), einem Profilserver 203 und einem Authentifizierungsserver 205 (AAASvr). Der Anwendungsserver 201 kommuniziert mit dem Profilserver 203 sowie mit dem Authentifizierungsserver 205 in der in Fig. 2 dargestellten Weise. Dabei erfolgt die Korrelation der unterschiedlichen Benutzer bzw. Portinformationen zwischen dem Profilserver 203, dem Applikationsserver 201 und dem Authentifizierungsserver 205.

Der Profilserver 203 ist beispielsweise vorgesehen, um eine Erkennung eines AN und dessen Standortes, beispielsweise anhand der AN-ID und der vMAC durchzuführen. Der BRAS erkennt den AN beispielsweise anhand der AN-ID und der ANCP-PORTUP-Nachricht (ANCP: Access Node Control Protocol). Ein evtl. eingesetzter PPPoE Intermediate Agent kann beispielsweise in die PPPoE-Pakete ebenfalls die Ursprungskennung einsetzen (AN-ID, Slot, Port), so dass der BRAS die ankommenden ANCP-Nachrichten mit dem Endprodukt der PPPoE-Verbindung korrelieren kann. Alternativ kann sich der BRAS auch an der vMAC orientieren. Die Bildung der vMAC erfolgt beispielsweise nach einem definierten Algorithmus, wobei eine Zuordnung zu den ANCP-Nachrichten möglich ist.

Der Profilserver 203 ermittelt ferner die vorstehend beschriebenen ESEL-Parameter, die spezifisch für jeden AN sind. Sie hängen von verschiedenen Faktoren ab und werden bei der Projektierung eines AN-Standortes ermittelt und in einer Datenbank hinterlegt. Diese Parameter sind AN-weit gültig und ändern sich in der Regel nicht mehr während der gesamten Betriebsdauer des AN.

Der Profilserver 203 kann ferner vorgesehen werden, um das Profil zum Applikationsserver 201 zu übergeben. Die Profildaten können beispielsweise auf Anfrage an den Applikationsserver 201 übertragen werden.

Der Anwendungsserver 201 ist beispielsweise vorgesehen, um die jeweilige Anwendung mit dem Profil und den Kundendaten zu kombinieren. Das von dem Profilserver 203 bereitgestellte Profil mit den AN-spezifischen Daten kann beispielsweise mit benutzerspezifischen Daten kombiniert werden. So entsteht das zu verwendende Profil für den AN. Die benutzerspezifischen Anteile für das Profil erhält der Anwendungsserver 201 von dem Authentifikationsserver 205. Im Rahmen der Authentifizierung beispielsweise z.B. über PPPoE) liefert der Authentifizierungsserver 205 das zu den übergebenen Benutzerdaten gehörende Profil zurück. Der Anwendungsserver 201 selbst übernimmt keine Authentifizierung vor. Diese Aufgabe wird von dem Authentifizierungsserver 205 übernommen. Der Anwendungsserver 201 übermittelt jedoch die Anmeldedaten an den Authentifizierungsserver 205 und wertet das Ergebnis der Authentifizierung aus.

Der Anwendungsserver 201 kann ferner eine Aufforderung zum Profilwechsel aussenden. Nachdem das zu verwendende Profil gebildet wurde, kann beispielsweise der BRAS den AN zu einem Profilwechsel auffordern. Diese Aufforderung kann z.B. per ANCP erfolgen. Diese Funktion kann wie nachstehend ausgeführt umgesetzt werden.

Gemäß einer Ausführungsform kann der Profil-Datensatz komplett übertragen werden (Complete Push). Aus den Produktinformationen sowie aus den Standortinformationen (z.B. AN-ID, vMAC) ergibt sich über einen Profilserver ein Profil, welches dem jeweiligen Port zugewiesen werden kann. Dieses Profil kann beispielsweise erneut via ANCP auf den AN übertragen und dort via ANCP zugewiesen werden. Mit der Zuweisung dieses Profils erfolgt eine Änderung des Synchronisationszustandes der Leitung mit oder ohne Neusynchronisation, wobei eine Seemless Rate Adaptation durchgeführt werden kann.

Gemäß einer weiteren Ausführungsform können Teile des Profil-Datensatzes vom BRAS übertragen werden (Partial-Push-Betrieb). Dabei kann das Profil direkt auf dem AN erzeugt werden, sofern dieser diese Funktion unterstützt. Dabei sind die AN-spezifischen Parameter bereits als beispielsweise die ESEL-Parameter auf dem AN konfiguriert. Die kunden- bzw. produktindividuellen Parameter können zum AN übertragen und von diesem in ein Profil für den jeweiligen Benutzerport ergänzt werden. Mit der Zuweisung dieses Profils erfolgt eine Änderung des Synchronisationszustandes der Leitung mit oder ohne Neusynchronisation, wobei eine Seemless Rate Adaption durchgeführt werden kann.

Gemäß einer weiteren Ausführungsform kann der AN den Profildatensatz vom Profilserver 203 holen (Pull-Betrieb). Dabei wird dem AN eine Referenz, beispielsweise ein Profilname, übergeben. Der AN holt das Profil von dem Profilserver 203 ab. Mit der Zuweisung dieses Profils erfolgt eine Änderung des Synchronisationszustandes der Leitung mit oder ohne Neusynchronisation, wobei eine Seemless Rate Adaptation durchgeführt werden kann.

Gemäß einer weiteren Ausführungsform kann eine zeitliche Steuerung durchgeführt werden, falls dies durch eine temporäre Anwendung gefordert wird. Soll beispielsweise das Profil temporär geändert werden, so fällt das ProduktProfil nach einer vorbestimmten Zeit in den Ausgangszustand zurück. Der Anstoß für den Wechsel kann beispielsweise Timer-gesteuert oder durch ein externes Steuersignal erfolgen.

Gemäß einer weiteren Ausführungsform kann der AN in der Ausgangskonfiguration verbleiben, falls sich das gewünschte Profil vom AN nicht einstellen lässt (Fallback-Verhalten). Daraufhin erfolgt beispielsweise eine Rückmeldung vom AN an den Anwendungsserver.

Der Authentifizierungsserver 205 ist beispielsweise vorgesehen, um den Benutzer zu erkennen bzw. zu identifizieren. Dabei kann der Benutzer beispielsweise bei einer PPPoE-Einwahl am Authentifizierungsserver 205 beispielsweise über den Präfix der Kundenkennung erkannt werden. Auf der Basis der Authentifizierung kann das von dem Benutzer gebuchte Produktprofil ermittelt und die Konfiguration wie vorstehend beschrieben angestoßen werden. Zu den Aufgaben des Authentifizierungsservers 205 zählen beispielsweise der Abgleich der Kundendaten mit der Portinformation oder die Vorhaltung oder die Verwaltung von Abrechnungsinformationen.

Erfindungsgemäß wird angestrebt, das Verbindungsprofil an den Benutzer zu binden. Der AN wechselt beispielsweise die Konfiguration der Verbindung allerdings immer nur aus dem Default-Profil heraus auf ein anderes, durch den Benutzer bestimmtes Profil. Damit sich beispielsweise ein anderer Nutzer zeitgleich am gleichen Port, beispielsweise am gleichen DSL-Port anmelden kann, darf beispielsweise der DSLAN keinen weiteren Profilwechsel durchführen. Solange kein Benutzer angemeldet ist, gilt auf der Verbindungsleitung bzw. für den Port das Default-Profil. Dieses Profil erlaubt beispielsweise einem Modem oder einer IAD oder einem Router eine Synchronisation mit dem AN mit niedriger Bandbreite sowie eine IP-Kommunikation mit einem BRAS.

## Patentansprüche

1. Verfahren zum benutzerspezifischen Konfigurieren eines Kommunikationsports, mit den Schritten:
Bereitstellen eines Defaultprofils; und
Konfigurieren des Kommunikationsports unter Verwendung des Defaultprofils, so dass eine Grundkonfiguration erhalten wird, die einer zweiten Netzwerkentität zugeordnet ist;
**dadurch gekennzeichnet,**
**dass** das Defaultprofil auf einen vorbestimmten Benutzer hinweist und das Defaultprofil nach dem Erhalt der Grundkonfiguration über ein Kommunikationsnetzwerk zu einer ersten Netzwerkentität ausgesendet wird,
**dass** die erste Netzwerkentität das Defaultprofil einem dem vorbestimmten Benutzer zugeordneten, benutzerspezifischen Konfigurationsprofil zuordnet und das benutzerspezifische Konfigurationsprofil über das Kommunikationsnetzwerk zu der zweiten Netzwerkentität aussendet; und
**dass** der Kommunikationsport unter Verwendung des durch die zweite Netzwerkentität empfangenen benutzerspezifischen Konfigurationsprofils konfiguriert wird.

2. Verfahren gemäß Anspruch 1, wobei der Schritt des Zuordnens des Defaultprofils das Authentifizieren oder das Identifizieren oder das Erfassen des Standortes des vorbestimmten Benutzers oder der zweiten Netzwerkentität auf der Basis des Defaultprofils umfasst.

3. Verfahren gemäß einem des Ansprüche 1 oder 2, wobei das Defaultprofil einen Parameter der Schicht 1 oder der Schicht 2 eines Kommunikationsprotokolls, insbesondere einen DSL-SchichtParameter oder einen Ethernet-Parameter, umfasst.

4. Verfahren gemäß einem der Ansprüche 1, bis 3, wobei das Defaultprofil einen E-Side-Electrical-Length-Parameter umfasst.

5. Verfahren gemäß einem der Ansprüche 1 bis 4, wobei das Defaultprofil eine Benutzeridentifikation umfasst.

6. Verfahren gemäß einem der Ansprüche 1 bis 5, wobei der Schritt des benutzerapezifischen Konfigurierens eine VLAN-Konfiguration (VLAN: Virtual Local Area Network) oder eine Sprach-Daten-Umleitung oder eine QoS-Einstellung (QoS: Quality of Service) oder eine CoS-Einstellung (CoS: Class of Service) oder eine Einstellung eines Paketfilters oder eine Einstellung eines Frame-Filters oder eine Einstellung eines Multicastbetriebs oder eine Einstellung eines Netzwerkzugriffs oder eine Wahl eines netzwerkopezitischen Adaptionsmechanismus, insbesondere eines ATM (ATM: Asynchronous Transfer Mode) oder eines EFM (EFM: Ethernet in the First Mile), oder eine Wahl eines Encapsulationstypus, insbesondere eines Bridge- oder eines Routingtypus, umfasst.

7. Netzwerkentität zum Bereitstellen eines benutzerspezifischen Konfigurationsprofils eines Kommunikationsports, mit:
einem Profilserver (111; 203) zum Zuordnen eines Defaultprofils zu einer weiteren Netzwerkentität, um ein Grundkonfigurationsprofil, das der weiteren Netzwerkentität zugeordnet ist, zu erhalten;
einem Anwendungsserver (109; 201) zum Verknüpfen des Grundkonfigurationsprofils mit benutzerspezifischen Daten, um das benutzerspezifische Konfigurationsprofil des Kommunikationsports zu erhalten; und
einem Empfänger zum Empfangen des Defaultprofils und einem Sender zum Aussenden des benutzerspezifischen Konfigurationsprofils.

8. Netzwerkentität gemäß Anspruch 7, die ferner einen Authentifizierungsserver (113; 205) oder einen Identifizierungsserver umfasst, der ausgebildet ist, die weitere Netzwerkentität oder einen Benutzer auf der Basis des Defaultprofils zu authentifizieren oder zu identifizieren.

9. Verfahren zum Bereitstellen eines benutzerspezifischen Konfigurationsprofils eines Kommunikationsports unter Verwendung einer Netzwerkentität nach Anspruch 7, mit:
Zuordnen eines Defaultprofils zu einer weiteren Netzwerkentität, um ein Grundkonfigurationsprofil, das der weiteren Netzwerkentität zugeordnet ist, zu erhalten; und
Verknüpfen des Grundkonfigurationsprofils mit benutzerspezifischen Daten, um das benutzerspezifische Konfigurationsprofil des Kommunikationsports zu erhalten.

10. Netzwerkentität (103) mit einem konfigurierbaren Kommunikationsport und:
einer Bereitstellungseinrichtung zum Bereitstellen eines Defaultprofils;
einer Konfigurationseinrichtung zum Konfigurieren des konfigurierbaren Kommunikationsports unter Verwendung des Defaultprofils, um eine Defaultkonfiguration des konfigurierbaren Kommunikationsports zu erhalten;
einem Sender zum Aussenden des Defaultprofils unter Verwendung der Defaultkonfiguration;
einem Empfänger zum Empfangen eines benutzerspezifischen Konfigurationsprofils unter Verwendung der Defaultkonfiguration; wobei
die Konfigurationseinrichtung ausgebildet ist, den konfigurierbaren Kommunikationsport unter Verwendung des benutzerspezifischen Konfigurationsprofils zu konfigurieren.

11. Verfahren zum Konfigurieren eines konfigurierbaren Kommunikationsports unter Verwendung einer Netzwerkentität nach Anspruch 10, mit:
Bereitstellen eines Defaultprofils;
Konfigurieren des konfigurierbaren Kommunikationsports unter Verwendung des Defaultprofils, um eine Defaultkonfiguration des konfigurierbaren Kommunikationsports zu erhalten;
Aussenden des Defaultprofils unter Verwendung der Defaultkonfiguration;
Empfangen eines benutzerspezifischen Konfigurationsprofils unter Verwendung der Defaultkonfiguration; und
Konfigurieren des konfigurierbaren Kommunikationsports unter Verwendung des benutzerspezifischen Konfigurationsprofils.

## Claims

1. A method for the user-specific configuration of a communications port, comprising the steps of:
providing a default profile; and
configuring the communications port using the default profile so as to obtain a base configuration that is assigned to a second network entity,
**characterised in that**
the default profile points to a pre-determined user and the default profile is transmitted to a first network entity via a communications network upon receiving the base configuration,
that the first network entity assigns the default profile to a user-specific configuration profile assigned to the pre-determined user and transmits the user-specific configuration profile to the second network entity via the communications network; and
that the communications port is configured using the user-specific configuration profile received by the second network entity.

2. The method according to claim 1, wherein the step of assigning the default profile comprises authenticating or identifying or detecting the location of the pre-determined user or of the second network entity based on the default profile.

3. The method according to any one of claims 1 or 2, wherein the default profile comprises a parameter of layer 1 or layer 2 of a communications protocol, in particular a DSL layer parameter or an Ethernet parameter.

4. The method according to any one of claims 1 to 3, wherein the default profile comprises an E-side electrical length parameter.

5. The method according to one of claims 1 to 4, wherein the default profile comprises a user identification.

6. The method according to any one of claims 1 to 5, wherein the step of user-specific configuration comprises a VLAN configuration (VLAN: Virtual Local Area Network) or a voice-data rerouting or a QoS setting (QoS: Quality of Service) or a CoS setting (CoS: Class of Service) or a packet filter setting or a frame filter setting or a multicast mode setting or a network access setting or a selection of a network-specific adaptation mechanism, in particular of an ATM (ATM: Asynchronous Transfer Mode) or an EFM (EFM: Ethernet in the First Mile), or a selection of an encapsulation type, in particular of a bridge or a routing type.

7. A network entity for providing a user-specific configuration profile of a communications port, comprising:
a profile server (111; 203) for assigning a default profile to a further network entity so as to obtain a base configuration profile that is assigned to the further network entity; and
an application server (109; 201) for linking the base configuration profile to user-specific data so as to obtain the user-specific configuration profile of the communications port, and
a receiver for receiving the default profile and a transmitter for transmitting the user-specific configuration profile.

8. The network entity according to claim 7, further comprising an authentication server (113; 205) or an identification server that is adapted to authenticate or identify the further network entity or a user based on the default profile.

9. A method for providing a user-specific configuration profile of a communications port using a network entity according to claim 7, the method comprising:
assigning a default profile to a further network entity so as to obtain a base configuration profile that is assigned to the further network entity; and
linking the base configuration profile to user-specific data so as to obtain the user-specific configuration profile of the communications port.

10. Network entity (103) having a configurable communications port and:
a provision device for providing a default profile;
a configuration device for configuring the configurable communications port using the default
profile so as to obtain a default configuration of the configurable communications port;
a transmitter for transmitting the default profile using the default configuration;
a receiver for receiving a user-specific configuration profile using the default configuration; wherein
the configuration device is adapted to configure the configurable communications port using the user-specific configuration profile.

11. A method for configuring a configurable communications port using a network entity according to claim 10, the method comprising:
providing a default profile;
configuring the configurable communications port using the default profile so as to obtain a default configuration profile of the configurable communications port;
transmitting the default profile using the default configuration;
receiving a user-specific configuration profile using the default configuration; and
configuring the configurable communications port using the user-specific configuration profile.

## Revendications

1. Procédé de configuration spécifique utilisateur d'un port de communication comprenant les étapes :
fourniture d'un profil de défaut ; et
configuration du port de communication à l'aide du profil de défaut de manière à obtenir une configuration de base affectée à une deuxième entité de réseau,
**caractérisé en ce que**
le profil de défaut indique un utilisateur prédéfini et **en ce que**, après réception de la configuration de base, le profil de défaut est envoyé à une première entité de réseau par l'intermédiaire d'un réseau de communication,
**en ce que** la première entité affecte le profil de défaut à un profil de configuration spécifique utilisateur affecté à l'utilisateur prédéfini et envoie le profil de configuration spécifique utilisateur à la deuxième entité de réseau par l'intermédiaire du réseau de communication ; et
**en ce que** le port de communication est configuré à l'aide du profil de configuration spécifique utilisateur reçu par la deuxième entité de réseau.

2. Procédé selon la revendication 1, dans lequel l'étape d'affectation du profil de défaut comprend l'authentification ou l'identification ou la détection de la localisation de l'utilisateur prédéfini ou de la deuxième entité de réseau sur la base du profil de défaut.

3. Procédé selon l'une des revendications 1 ou 2, dans lequel le profil de défaut comprend un paramètre de la couche 1 ou de la couche 2 d'un protocole de communication, notamment un paramètre de couche DSL ou un paramètre Ethernet.

4. Procédé selon l'une des revendications 1 à 3, dans lequel le profil de défaut comprend un paramètre E-side electrical length.

5. Procédé selon l'une des revendications 1 à 4, dans lequel le profil de défaut comprend une identification de l'utilisateur.

6. Procédé selon l'une des revendications 1 à 5, dans lequel l'étape de configuration spécifique utilisateur comprend une configuration VLAN (VLAN : Virtual Local Area Network) ou un reroutage voix/données ou un réglage QoS (QoS : Quality of Service) ou un réglage CoS (CoS : Class of Service) ou un réglage d'un filtre de paquet ou un réglage d'un filtre de trame ou un réglage d'un fonctionnement multicast ou un réglage d'un accès réseau ou un choix d'un mécanisme d'adaptation spécifique au réseau, notamment d'un ATM (ATM : Asynchronous Transfer Mode) ou d'un EFM (EFM : Ethernet in the First Mile) ou un choix d'un type d'encapsulation, notamment d'un type de bridge ou de routage.

7. Entité de réseau pour la fourniture d'un profil de configuration spécifique utilisateur d'un port de communication, comprenant :
un serveur de profil (111; 203) pour affecter un profil de défaut à une entité de réseau supplémentaire de manière à obtenir un profil de configuration de base affecté à l'entité de réseau supplémentaire ; et
un serveur d'application (109; 201) pour associer le profil de configuration de base aux données spécifiques utilisateur de manière à obtenir le profil de configuration spécifique utilisateur du port de communication, et
un récepteur pour recevoir le profil de défaut et un émetteur pour envoyer le profil de configuration spécifique utilisateur.

8. Entité de réseau selon la revendication 7 comprenant en plus un serveur d'authentification (113; 205) ou un serveur d'identification conçu pour authentifier ou identifier l'entité de réseau supplémentaire ou un utilisateur sur la base du profil de défaut.

9. Procédé de fourniture d'un profil de configuration spécifique utilisateur d'un port de communication à l'aide d'une entité de réseau selon la revendication 7, comprenant :
l'affectation d'un profil de défaut à une entité de réseau supplémentaire de manière à obtenir un profil de configuration de base affecté à l'entité de réseau supplémentaire ; et
association du profil de configuration de base aux données spécifiques utilisateur de manière à obtenir le profil de configuration spécifique utilisateur du port de communication.

10. Entité de réseau (103) comprenant un port de communication configurable et :
un dispositif de fourniture d'un profil de défaut ;
un dispositif de configuration du port de communication configurable à l'aide du profil de défaut de manière à obtenir une configuration de défaut du port de communication configurable ;
un émetteur pour envoyer le profil de défaut à l'aide de la configuration de défaut ;
un récepteur pour recevoir un profil de configuration spécifique utilisateur à l'aide de la configuration de défaut,
le dispositif de configuration étant conçu pour configurer le port de communication configurable à l'aide du profil de configuration spécifique utilisateur.

11. Procédé de configuration d'un port de communication configurable à l'aide d'une entité de réseau selon la revendication 10, comprenant :
la fourniture d'un profil de défaut ;
la configuration du port de communication configurable à l'aide du profil de défaut de manière à obtenir une configuration de défaut du port de communication configurable ;
l'envoi du profil de données à l'aide de la configuration de défaut ;
la réception d'un profil de configuration spécifique utilisateur à l'aide de la configuration de défaut ; et
la configuration du port de communication configurable à l'aide du profil de configuration spécifique utilisateur.
